(19)

Europäisches Patentamt

European Patent Office

Office européen des brevets

(11) **EP 2 886 592 A1**

(12) **EUROPEAN PATENT APPLICATION**

(43) Date of publication:
24.06.2015 Bulletin 2015/26

(21) Application number: 13199102.8

(22) Date of filing: 20.12.2013

(51) Int Cl.:
*C08K 3/30* (2006.01) *C08K 3/32* (2006.01)
*C08G 63/672* (2006.01) *C08K 5/13* (2006.01)
*C08K 5/132* (2006.01) *C08K 5/17* (2006.01)
*C08L 67/02* (2006.01) *C08K 3/24* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Invista Technologies S.A R.L.**
**9000 St. Gallen (CH)**

(72) Inventors:
• **Leuschner, Eva-Maria**
**86150 Augsburg (DE)**

• **Wiedemann, Josef**
**86441 Zusmarshausen (DE)**
• **Bayer, Uwe**
**86459 Gessertshausen (DE)**
• **Fritsch, Karsten**
**86830 Schwabmünchen (DE)**

(74) Representative: **Conroy, John et al**
**Fish & Richardson P.C.**
**Highlight Business Towers**
**Mies-van-der-Rohe-Straße 8**
**80807 München (DE)**

(54) **Improved polyester-ether resin blends**

(57)    The application relates to composition for preparing articles, preforms or containers comprising a base polyester; a copolyester-ether, and a transition metal-based oxidation catalyst; wherein delamination is reduced by reducing the melting point difference, determined according to ASTM D 3418-97, between the base polyester and the copolyester-ether to less than 15°C.

**EP 2 886 592 A1**

**Description**

FIELD OF THE INVENTION

The present invention relates to novel polyester-ethers and their use in polyester resins. When blow-molded, containers comprising these polyester-ethers show reduced delamination. The present invention further relates to methods for preparing resins, articles, preforms and containers comprising these polyester-ethers.

BACKGROUND OF THE INVENTION

Polyesters have been replacing glass and metal packaging materials due to their lighter weight, decreased breakage compared to glass, and potentially lower cost. One major deficiency with standard polyesters, however, is its relatively high gas permeability. This curtails the shelf life of carbonated soft drinks and oxygen sensitive beverages or foodstuffs such as beer, wine, tea, fruit juices, ketchup, cheese and the like. Organic oxygen scavenging materials have been developed partly in response to the food industry's goal of having longer shelf-life for packaged food.

One method of addressing gas permeability involves incorporating an oxygen scavenger into the package structure itself. In such an arrangement, oxygen scavenging materials constitute at least a portion of the package, and these materials remove oxygen from the enclosed package volume which surrounds the product or which may leak into the package, thereby inhibiting spoilage and prolonging freshness in the case of food products.

Suitable oxygen scavenging materials include oxidizable organic polymers in which either the backbone or the side-chains of the polymer react with oxygen. Such oxygen scavenging materials are typically employed with a suitable catalyst, for example, an organic or inorganic salt of a transition metal such as cobalt.

One example of an oxidizable organic polymer is a polyether. The polyether is typically used as polyester-ether copolymer and in low amounts of less than 10 weight percent of the packaging material. Typically, the polyester-ether is dispersed in the polyester phase and forms discrete domains within this phase.

Polyester containers comprising polyester-ethers and an oxidation catalyst show excellent oxygen barrier properties, but suffer from a delamination phenomenon: When such containers are subjected to shock, e.g. by dropping the container from greater heights, the container may delaminate. This is a surprising type of material failure since the container is a monolayer bottle made from a homogeneous blend of polyester and polyester-ether. Nevertheless, the bottle delaminates as if it is made of a multilayer material. Delamination is a major concern for the packaging industry since delaminated containers may leak and since customers may not be willing to accept defects in appearance caused by delamination. In addition, delamination may have a negative impact on barrier properties. Also in film applications delamination may be undesirable.

There is a need in the art to provide oxygen-scavenging materials having a reduced delamination behavior.

SUMMARY OF THE INVENTION

It was surprisingly found that polyester articles comprising the polyester-ethers of the present invention show reduced delamination. It was further found that delamination is reduced if the melting point of these copolyester-ethers is matched to be in the region of the melting point of the polyester used as base resin to prepare the container. Since polyesters used for container applications typically have melting points of about 240-250°C, this means that those copolyester-ethers of the present invention having melting points between about 225°C and 250°C are particularly suitable for reducing delamination in containers.

Without wishing to be bound by theory, it is believed that the reason for the observed reduced delamination is that localized stress induced by e.g. dropping the container is more readily relaxed in the container wall if the copolyester-ether domains are formed from the copolyester-ethers of the present invention. This is supported by the finding that the reduced delamination behavior correlates with the melting point of the copolyester-ethers of the present invention. Again without wishing to be bound by theory, it appears that viscous dissipation of fracture energy is favored by matching the melting points of the polyester base resin and the copolyester-ether of the present invention.

Accordingly, in one aspect, there is provided a composition for preparing an article, preform or container comprising:

    a) 80-99.5 parts by weight of a base polyester;
    b) 0.5-20 parts by weight of a copolyester-ether, wherein the copolyester-ether comprises one or more polyester segments and one or more polyether segments, wherein the one or more polyether segments are present in an amount of about 5 to about 45 wt.-% of the copolyester-ether; and
    c) a transition metal-based oxidation catalyst;

wherein the melting point difference, determined according to ASTM D 3418-97, between the base polyester and the copolyester-ether is less than 15°C.

There are also provided an article or preform comprising or prepared from such a composition as well as a container comprising or prepared from such a composition or preform.

In another aspect, there is provided a masterbatch for use in preparing an article, preform or container comprising, preferably consisting of:

a) a copolyester-ether,

a1) wherein the copolyester-ether comprises one or more polyethylene terephthalate (co)polymer segments and one or more linear or branched poly (C$_2$-C$_6$-alkylene glycol) segments,
a2) wherein the one or more polyether segments are present in an amount of from about 5 to about 45 wt.% in the copolyester-ether, and
a3) wherein the melting point, determined according to ASTM D 3418-97, of the copolyester-ether is from 225°C to 250°C; and

b) from 20 to 5000 ppm, on basis of the weight of the one or more linear or branched poly (C$_2$-C$_6$-alkylene glycol) segments, of one or more antioxidants selected from group consisting of hindered phenols, benzophenones, sulfur-based antioxidants, phosphites and hindered amine light stabilizers.

The masterbatch may optionally comprise, preferably consist of, one or more of a polyester or a copolyester, a transition metal-based oxidation catalyst, an ionic compatibilizer and one or more additives selected from the group consisting of dyes, pigments, fillers, branching agents, reheat agents, anti-blocking agents, anti-static agents, biocides, blowing agents, coupling agents, flame retardants, heat stabilizers, impact modifiers, crystallization aids, lubricants, plasticizers, processing aids, buffers, and slip agents.

In another aspect, there is provided a copolyester-ether comprising one or more polyethylene terephthalate (co)polymer segments and one or poly(butylene glycol) or poly(propylene glycol) segments, wherein the one or more poly(butylene glycol) or poly(propylene glycol) segments are present in an amount of from about 20 to about 35 wt.-% in the copolyester-ether, and having a melting point, determined according to ASTM D 3418-97, of from 225°C to 250°C.

In another aspect, there is provided a method of preparing an article, preform or container, wherein 80 - 99.5 parts by weight of a base polyester are blended with:

a) 0.5-20 parts by weight of a copolyester-ether, wherein the copolyester-ether comprises one or more polyester segments and one or more polyether segments, wherein the one or more polyether segments are present in an amount of about 5 to about 45 wt.% of the copolyester-ether; and
b) a transition metal-based oxidation catalyst;

wherein the melting point difference, determined according to ASTM D 3418-97, between the polyester and the copolyester-ether is less than 15°C.

In another aspect, there is provided the use of a copolyester-ether for preparing an article, preform or container; wherein the copolyester-ether comprises one or more polyester segments and one or more polyether segments, and wherein the one or more polyether segments are present in the copolyester-ether in an amount of from about 5 to about 45 wt.-%, and wherein the melting point of the copolyester-ether, determined according to ASTM D 3418-97, is from 225°C to 250°C.

There is also provided the use of such a copolyester-ether for preparing a kit-of-parts comprising said copolyester-ether and physical or electronic instructions or advises to use said copolyester-ether for preparing a preform or container.

DETAILED DESCRIPTION OF THE INVENTION

The following detailed description of components is applicable to all of the above-mentioned aspects of the present invention. In addition, individual elements of the detailed description are intended to be freely combinable with the above various aspects of the invention.

Generally, polyesters suitable for the present invention can be prepared by one of two processes, namely: (1) the ester process and (2) the acid process. The ester process is where a dicarboxylic ester (such as dimethyl terephthalate) is reacted with ethylene glycol or other diol in an ester interchange reaction. Catalysts for use in the ester interchange reaction are well known and may be selected from manganese, zinc, cobalt, titanium, calcium, magnesium or lithium compounds. Because the reaction is reversible, it is generally necessary to remove the alcohol (e.g. methanol when dimethyl terephthalate is employed) to completely convert the raw materials into monomers. The catalytic activity of the interchange reaction catalyst may optionally be sequestered by introducing a phosphorus compound, for example polyphosphoric acid, at the end of the ester interchange reaction. Then the monomer undergoes polycondensation. The catalyst employed in this reaction is typically an antimony, germanium, aluminum, zinc, tin or titanium compound, or a mixture of these. In some embodiments, it may be advantageous to use a titanium compound. In the second method for making polyester, a diacid (such as terephthalic acid) is reacted with a diol (such as ethylene glycol) by a direct esterification reaction producing monomer and water. This reaction is also reversible like the ester process and thus to drive the reaction to completion one must remove the water. The direct esterification step does not require a catalyst. The monomer then undergoes polycondensation to form polyester just as in the ester process, and the catalyst and conditions employed are generally the same as those for the ester process. In summary, in the ester process there are two steps, namely: (1) an ester interchange, and (2) polycondensation. In the acid process there are also two steps, namely: (1) direct esterification, and (2) polycondensation.

Suitable polyesters can be aromatic or aliphatic polyesters, and are preferably selected from aromatic polyesters. An aromatic polyester is preferably derived from one or more diol(s) and one or more aromatic dicarboxylic acid(s). The aromatic dicarboxylic acid includes, for example, terephthalic acid, isophthalic acid, 1,4-, 2,5-, 2,6- or 2,7-naphthalenedicarboxylic acid and 4,4'-diphenyldicarboxylic acid (and of these terephthalic acid is preferred). The diol is preferably selected from aliphatic and cycloaliphatic diol(s), including, for example, ethylene glycol, 1,4-butanediol, 1,4-cyclohexane dimethanol, and 1,6-hexanediol (and of these, aliphatic diols, and preferably ethylene glycol, is preferred). Preferred polyesters are polyethylene terephthalate (PET) and polyethylene-2,6-naphthalene dicarboxylate (also referred to herein as polyethylene-2,6-naphthalate), and particularly preferred is PET.

Thus, suitable polyesters include those produced from the reaction of a diacid or diester component comprising at least 65 mol.-% aromatic diacid (preferably terephthalic acid) or the $C_1$-$C_4$ dialkyl ester of the aromatic acid (preferably $C_1$-$C_4$ dialkylterephthalate), for example at least 70 mol.-% or at least 75 mol.-% or at least 95 mol.-%, with a diol component comprising at least 65 mol.-% diol (preferably ethylene glycol), for example at least 70 mol.-% or at least 75 mol- % or at least 95 mol.-%. Exemplary polyesters include those wherein the diacid component is terephthalic acid and the diol component is ethylene glycol, thereby forming polyethylene terephthalate (PET). The mole percent for all the diacid components totals 100 mol.-%, and the mole percentage for all the diol components totals 100 mol.-%.

The polyester may be modified by one or more diol components other than ethylene glycol. In this case, the polyester is a copolyester. Suitable diol components of the described polyester may be selected from 1,4-cyclohexane-dimethanol, 1,2-propanediol, 1,4-butanediol, 2,2-dimethyl-1,3-propanediol, 2-methyl-1,3-propanediol (2MPDO) 1,6-hexanediol, 1,2-cyclo-hexanediol, 1,4-cyclohexanediol, 1,2-cyclohexanedimethanol, 1,3-cyclohexanedimethanol, and diols containing one or more oxygen atoms in the chain, e.g., diethylene glycol, triethylene glycol, dipropylene glycol, tripropylene glycol or mixtures of these, and the like. In general, these diols contain 2 to 18, preferably 2 to 8 carbon atoms. Cycloaliphatic diols can be employed in their cis- or trans-configuration or as mixture of both forms. Suitable modifying diol components can be 1,4-cyclohexanedimethanol or diethylene glycol, or a mixture of these.

The polyester may be modified by one or more acid components other than terephthalic acid. In this case, the polyester is a copolyester. Suitable acid components (aliphatic, alicyclic, or aromatic dicarboxylic acids) of the linear polyester may be selected, for example, from isophthalic acid, 1,4- cyclohexanedicarboxylic acid, 1,3-cyclohexanedicarboxylic acid, succinic acid, glutaric acid, adipic acid, sebacic acid, 1,12-dodecanedioic acid, 2,6-naphthalene-dicarboxylic acid, bibenzoic acid, or mixtures of these and the like. In the polymer preparation, it is possible to use a functional acid derivative of the above acid components. Typical functional acid derivatives include the dimethyl, diethyl, or dipropyl ester of the dicarboxylic acid or its anhydride.

Advantageously, the polyester is a copolyester of ethylene glycol with a combination of terephthalic acid and isophthalic acid and/or 5-sulfoisophthalic acid. Generally, the isophthalic acid can be present from about 0.05 mol.-% to about 10 mol.% and the 5-sulfoisophthalic acid from can be present from about 0.1 mol.% to about 3 mol.-% of the copolymer.

Advantageously, the polyester is selected from polyethylene terephthalate, polyethylene naphthalate, polyethylene isophthalate, copolymers of polyethylene terephthalate, copolymers of polyethylene naphthalate, copolymers of polyethylene isophthalate, or mixtures thereof; for example the polyester can be a copolymer of polyethylene terephthalate, such as poly(ethylene terephthalate-co-ethylene isophthalate) or poly(ethylene terephthalate-co-ethylene 5-sulfoisophthalate).

Advantageously, the polyester is a polyethylene terephthalate or a copolymer thereof having a melting point, determined according to ASTM D 3418-97, of about 240°C to about 250°C, in particular about 242°C to about 250°C, and especially about 245°C to about 250°C.

Advantageously, the polyester used in preparing the articles of the present invention has an intrinsic viscosity, measured according to the method described in the Test Procedures below, of about 0.6 dl/g to about 1.1 dl/g, in particular about 0.65 dl/g to about 0.95 dl/g.

The composition for preparing an article, preform or container comprises 80 - 99.5 parts by weight of a base polyester, including 85 - 99.5, 90 - 99.5, or 95 - 99.5 parts by weight of the base polyester. Preferably, the composition comprises 90 - 99.5 parts by weight of the base polyester.

Copolyester-ethers suitable for the present invention comprise one or more polyester segments and one or more polyether segments having a number-average molecular weight of from about 200 to about 5000 g/mol. Advantageously, the copolyester-ether has a number-average molecular weight of from about 600 to about 2500 g/mol, more specifically from about 800 to about 1800 g/mol or from about 1000 to about 1600 g/mol. The Copolyester-ethers are present in the composition in an amount from 0.5 - 20 parts by weight, including 0.5 - 15 parts by weight, 0.5 - 10 parts by weight, and 0.5 - 5 parts by weight. Preferably, the composition comprises 0.5 - 10 parts by weight of the copolyester-ethers.

The one or more polyether segments are present in an amount of about 5 to about 45 wt.-% of the copolyester-ether. Advantageously, the polyether segments are present in an amount of about 10 to about 40 wt.%, more specifically about 20 to about 40 wt.-%, or in particular about 25 to about 35 wt.-% or about 25 to about 30 wt.-%, in all cases based on the copolyester-ether.

Generally, copolyester-ethers suitable for the present invention comprise one or more polyether segments in amounts so that the weight ratio of the one or more polyether segments to the total amount of base polyester and polyester segments in the composition is about 0.2 to about 10 wt.-%, more specifically about 0.5 to about 5 wt.-%, or in particular about 0.7 to about 5 wt.-%, or about 0.5 to about 1.5 wt.%, or about 1 to about 2.5 wt.-%.

Advantageously, the polyether segment is a poly ($C_2$-$C_6$-alkylene glycol) segment. The $C_2$-$C_6$-alkylene glycol may be a linear or branched aliphatic $C_2$-$C_6$-moiety. Specific examples of such copolyester-ethers include poly(ethylene glycol), linear or branched poly(propylene glycol), linear or branched poly(butylene glycol), linear or branched poly(pentylene glycol), linear or branched poly(hexylene glycol) as well as mixed poly ($C_2$-$C_6$-alkylene glycols) obtained from two or more of the glycolic monomers used in preparing the before-mentioned examples. Advantageously, the polyether segment may be a linear or branched poly(propylene glycol) or a linear or branched poly(butylene glycol).

The copolyester-ethers suitable for the present invention also comprise one or more polyester segments. The type of polyester in these segments is not particularly limited and can be any of the above-referenced polyesters. Advantageously, the copolyester-ether comprises a polyethylene terephthalate (co)polymer segment. Advantageously, the copolyester-ether may comprise a polyethylene terephthalate (co)polymer segment and a linear or branched poly(butylene glycol) segment.

Furthermore, the melting point difference, determined according to ASTM D 3418-97, between the polyester and the copolyester-ether is less than about 15°C. Advantageously, the melting point difference is less than about 10°C, more specifically less than about 8°C or less than about 5°C. Advantageously, the melting point, determined according to ASTM D 3418-97, of the polyester is about 240°C to about 250°C and that of the copolyester-ether is about 225°C to 250°C, in particular about 230°C to about 250°C, especially about 232°C to about 250°C or about 240°C to about 250°C. The melting points of the copolyester-ether and polyester may be determined for the starting materials or in the final composition.

Methods of preparing polyethers and copolyester-ethers are well known in the art. For example, the copolyester-ether can be produced by ester interchange with the dialkyl ester of a dicarboxylic acid. In the ester interchange process dialkyl esters of dicarboxylic acids undergo transesterification with one or more glycols in the presence of a catalyst such as zinc acetate as described in WO 2010/096459 A2, incorporated herein by reference. A suitable amount of elemental zinc in the copolyester-ether can be about 35 to about 100 ppm, for example about 40 to about 80 ppm, by weight of the copolyester-ether. The poly(alkylene oxide) glycols replace part of these glycols in these transesterification processes. The poly(alkylene oxide) glycols can be added with the starting raw materials or added after transesterification. In either case, the monomer and oligomer mixture can be produced continuously in a series of one or more reactors operating at elevated temperature and pressures at one atmosphere or lesser. Alternatively, the monomer and oligomer mixture can be produced in one or more batch reactors. Suitable conditions for these reactions are temperatures of from about 180°C to 250°C and pressures of from about 1 bar to 4 bar.

Next, the mixture of copolyester-ether monomer and oligomers undergoes melt-phase polycondensation to produce a polymer. The polymer is produced in a series of one or more reactors operating at elevated temperatures. To facilitate removal of excess glycols, water, and other reaction products, the polycondensation reactors are run under a vacuum. Catalysts for the polycondensation reaction include compounds of antimony, germanium, tin, titanium and/or aluminum. In some embodiments, it may be advantageous to use a titanium compound. A suitable amount of elemental Ti can be about 5 to about 60 ppm, for example about 10 to 35 ppm. Reaction conditions for polycondensation can include (i) a temperature less than about 290°C, or about 10°C higher than the melting point of the copolyester-ether; and (ii) a pressure of less than about 0.01 bar, decreasing as polymerization proceeds. This copolyester-ether can be produced continuously in a series of one or more reactors operating at elevated temperature and pressures less than one atmosphere. Alternatively this copolyester-ether can be produced in one or more batch reactors. The intrinsic viscosity after melt phase polymerization can be in the range of about 0.5 dl/g to about 1.5 dl/g. Antioxidants and other additives can be added before and/or during polymerization to control the degradation of the polyester-ether segments.

Alternatively, the copolyester-ethers can be produced by reactive extrusion of the polyether with the polyester. In the above-described methods of preparing the copolyester-ethers, it may happen that the polyether does not fully react with the polyester but is partly present as an intimate blend of the polyester and polyether. Therefore, throughout the specification and claims, the reference to a copolyester-ether comprising one or more polyester segments and one or more polyether segments is to be understood as referring to the respective copolyester-ethers, blends of respective polyesters and polyethers, and mixtures comprising both the respective copolyester-ethers and blends of the respective polyesters and polyethers.

The melting point of the copolyester-ether can be conveniently controlled by adjusting various characteristics or parameters of the polymer composition, as known to those skilled in the art. For instance, one skilled in the art may opt to suitably select the molecular weight of the polyether segment, and/or the weight ratio of polyester segment to polyether segment to adjust the melting point. It is also possible to select different types of polyester to adjust the melting point. For example, aromatic polyesters are known to have higher melting points than aliphatic polyesters. Thus, one skilled in the art may select or mix suitable polyesters to reliably adjust the melting point of the copolyester-ether. Other options include suitably selecting the type of polyether. For instance, the chain length and the presence or absence of a side chain influences the melting point of the copolyester-ether. A further possibility is the addition of additives.

The copolyester-ether is preferably used in amounts of about 0.5 to about 20 wt.-% in relation to the final composition. Advantageously, the amount of the copolyester-ether is selected within the range of about 0.5 to about 10 wt.-%, in relation to the final composition, so that the amount of polyether segments to the total amount of base polyester and polyester segments in the composition is about 0.2 to about 10 wt.-%, more specifically about 0.5 to about 10 wt.-%, or in particular about 0.7 to about 5 wt.-%, or about 0.5 to about 1.5 wt.-%, or about 1 to about 2.5 wt.-%.

It is particularly advantageous that the copolyester-ether contains one or more polyether segments in an amount of about 15 to about 35 wt.-%, in particular about 20 to about 30 wt.-%, and that the amount of the copolyester-ether is selected within the range of about 0.5 to about 20 wt.%, in relation to the final composition, so that the amount of polyether segments to the total amount of base polyester and polyester segments in the composition is about 0.5 to about 10 wt.%, in particular about 0.7 to about 5 wt.-%, or about 0.5 to about 1.5 wt.-%, or about 1 to about 2.5 wt.-%.

It is particularly advantageous that the polyether segments in the copolyester-ether have a number-average molecular weight of from about 600 to about 2000 g/mol, in particular about 800 to about 1600 g/mol, that the copolyester-ether contains one or more polyether segments in an amount of about 15 to about 35 wt.-%, in particular about 20 to about 30 wt.-%, and that the amount of the copolyester-ether is selected within the range of about 0.5 to about 20 wt.-%, in relation to the final composition, so that the amount of polyether segments to the total amount of base polyester and polyester segments in the composition is about 0.5 to about 10 wt.-%, in particular about 0.7 to about 5 wt.-%, or about 0.5 to 1.5 wt.-%, or about 1 to about 2.5 wt.-%.

It is particularly advantageous that the polyether segments in the copolyester-ether are selected from a linear or branched poly(propylene glycol) or a linear or branched poly(butylene glycol) having a number-average molecular weight of from about 600 to about 2000 g/mol, in particular about 800 to about 1600 g/mol, that the copolyester-ether contains one or more polyether segments in an amount of about 15 to about 35 wt.-%, in particular about 20 to about 30 wt.%, and that the amount of the copolyester-ether is selected within the range of about 0.5 to about 20 wt.-%, in relation to the final composition, so that the amount of polyether segments to the total amount of base polyester and polyester segments in the composition is about 0.5 to about 10 wt.-%, in particular about 0.7 to about 5 wt.-%, or 0.5 to 1.5 wt.-%, or about 1 to about 2.5 wt.-%.

It is particularly advantageous that the polyether segments in the copolyester-ether are selected from a linear or branched poly(propylene glycol) or a linear or branched poly(butylene glycol) having a number-average molecular weight of from about 600 to about 2000 g/mol, in particular about 800 to about 1600 g/mol, that the copolyester-ether contains one or more polyether segments in an amount of about 15 to about 35 wt.-%, in particular about 20 to about 30 wt.%, that the amount of the copolyester-ether is selected within the range of about 0.5 to about 20 wt.-%, in relation to the final composition, so that the amount of polyether segments to the total amount of base polyester and polyester segments in the composition is about 0.7 to about 5 wt.-% , or about 0.5 to about 1.5 wt.-%, in particular about 1 to about 2.5 wt.-%, and that the melting point, determined according to ASTM D 3418-97, of the copolyester-ether is about 225°C to about 250°C, especially about 235°C to about 250°C, or in particular about 240°C to about 250°C.

Where the invention may further comprise a transition metal-based oxidation catalyst, suitable oxidation catalysts include those transition metal catalysts that activate or promote the oxidation of the copolyester-ether by ambient oxygen. Examples of suitable transition metals may include compounds comprising cobalt, manganese, copper, chromium, zinc, iron, or nickel. The transition metal-based oxidation catalyst may be present in the form of a metal salt. In this case, suitable counter ions for the transition metal include, but are not limited to, carboxylates, such as neodecanoates, octanoates, stearates, acetates, naphthalates, lactates, maleates, acetylacetonates, linoleates, oleates, palminates or 2-ethyl hexanoates, oxides, carbonates, chlorides, dioxides, hydroxides, nitrates, phosphates, sulfates, silicates or mixtures thereof. It is also possible that the transition metal-based oxidation catalyst is incorporated in the polymer matrix during e.g. extrusion. The transition metal-based oxidation catalyst can be added during polymerization of the polyester or compounded into a suitable polyester thereby forming a polyester-based masterbatch that can be added during the preparation of the article. Advantageously, the transition metal based oxidation catalyst is a cobalt compound. In the container- or preform-related embodiments of the present invention, it may be advantageous that the transition metal-based oxidation catalyst is a cobalt compound that is present in an amount of 30 - 200 ppm, more specifically 60-120 ppm, on basis of the weight of cobalt atom in the total composition. In the masterbatch-related embodiments of the present invention, it may be advantageous that the transition metal-based oxidation catalyst is a cobalt compound that is present in an amount of 50-5,000 ppm, more specifically 100-2,500 ppm, on basis of the weight of cobalt in the total composition. In the embodiments of the present invention, it may be advantageous that the transition metal-based oxidation catalyst is supplied as a cobalt salt, in particular a cobalt carboxylate, and especially a cobalt $C_8$-$C_{20}$ carboxylate. The cobalt compound may be physically separate from the copolyester-ether, for example a sheath core or side-by-side relationship, so as not to activate the copolyester-ether prior to melt blending into a preform or bottle.

Embodiments in some aspects of the invention may further comprise an antioxidant selected from the group consisting of hindered phenols, benzophenones, sulfur-based antioxidants, phosphites and hindered amine light stabilizers. Examples of such antioxidants include, but are not limited to 1,3,5-trimethyl-2,4,6-tris(3,5-di-tert-butyl-4-hydroxybenzyl)-benzene (CAS: 1709-70-2), tetrakis(2,4-di-tert-butylphenyl)-1,1-biphenyl-4,4'-diylbis-phosphonite (CAS: 38613-77-3) and pentaerythritol tetrakis(3-(3,5-di-tert-butyl-4-hydroxyphenyl)propionate (CAS: 6683-19-8). Advantageously, one or more antioxidants are used in a total amount of 40 ppm - 10,000 ppm, more specifically 80 ppm - 5,000 ppm or 120 ppm-3,000 ppm, and in particular 150 ppm - 2,000 ppm, on basis of the total weight of the one or more antioxidants to the total weight of the composition.

Embodiments in some aspects of the invention may further comprise additives selected from the group consisting of dyes, pigments, fillers, branching agents, reheat agents, anti-blocking agents, anti-static agents, biocides, blowing agents, coupling agents, flame retardants, heat stabilizers, impact modifiers, crystallization aids, lubricants, plasticizers, processing aids, buffers, and slip agents. Representative examples of such additives are well-known to the skilled person.

It may be advantageous that an ionic compatibilizer is present or used. Suitable ionic compatibilizers can for instance be copolyesters prepared by using ionic monomer units as disclosed in WO 2011/031929 A2, page 5, incorporated herein by reference.

One aspect of the invention refers to the use of copolyester-ether, wherein the copolyester-ether comprises one or more polyether segments having a number-average molecular weight of from 200 to 5000 g/mol, wherein the one or more polyether segments are present in the copolyester-ether in an amount of about 5 to about 45 wt.-%, and wherein the melting point of the copolyester-ether, determined according to ASTM D 3418-97, is from 225°C and 250°C; for preparing a kit-of-parts comprising said copolyester-ether and physical or electronic instructions or advise to use said copolyester-ether for preparing a preform or container. A non-limiting example of such a kit-of-parts is a package comprising the copolyester-ether that is containing or accompanied by a shipping document that specifies that the contents of the package are intended for use in preforms or containers. A further non-limiting example of such a kit-of-part is a package or storage form comprising the copolyester-ether and a webpage stating that the copolyester-ether is available for sale for use in preforms or containers.

In masterbatch embodiments of the present invention, it may be advantageous that the masterbatch is mixed or packaged with another masterbatch comprising the transition metal based oxidation catalyst (a "salt and pepper" mixture). It may be advantageous that the other masterbatch comprising the transition metal based oxidation catalyst further comprises a polyester.

The disclosed compositions, masterbatches and methods may be used for preparing articles of manufacture. Suitable articles include, but are not limited to, film, sheet, tubing, pipes, fiber, container preforms, blow molded articles such as rigid containers, thermoformed articles, flexible bags and the like and combinations thereof. Typical rigid or semi-rigid articles can be formed from plastic, paper or cardboard cartons or bottles such as juice, milk, soft drink, beer and soup containers, thermoformed trays or cups. In addition, the walls of such articles may comprise multiple layers of materials.

The term "comprising" encompasses "including" as well as "consisting" *e.g.* a composition "comprising" X may consist exclusively of X or may include something additional *e.g.* X + Y.

The invention is further illustrated by the following examples, although it will be understood that these examples are included for the purposes of illustration only and are not intended to limit the scope of the invention.

TEST PROCEDURES

Number Average Molecular Weight

The number average molecular weight of the polyols is determined by the titration method for the hydroxyl number of the polyols. Similar ASTM methods are ASTM E222A and ASTM E222B, herein incorporated by reference.

For that 1 h of polyglycol, whereas the actual weight is dependent on the expected hydroxyl number - (expected to be 50/hydroxyl number), was added into a 100 mL beaker 15 mL of dry tetrahydrofuran and the sample dissolved using a magnetic stirrer. 10 mL of p-toluenesulfonyl isocyanate in 250 mL anhydrous acetonitrile was then added to the solution. The solution was then stirred for five minutes after 1 mL of water was added.

Then the solution was diluted to 60 mL with tetrahydrofuran and titrated with 0.1 N tetrabutyl ammonium hydroxide (TBAOH) using an automatic titrator.

(TBAOH titrant: 100 mL 1M TBAOH/MeOH in 1000 mL Isopropanol. Standardize against potassium biphthalate or benzoic acid standards. Restandardize every time the electrode is recalibrated.)

The hydroxyl number of the polyol was calculated as followed:

$$Hydroxyl\ number\ (OH\#) = \frac{(V2 - V1) \cdot N \cdot 56.1}{sample\ weight}$$

whereas

    V1 = Titrant volume at first equivalence point (low pH)
    V2 = Titrant volume at second equivalence point (higher oH)
    N = Normality of TBAOH

The number molecular weight of the polyol is then calculated as followed:

$$Molecular\ weight\ (number\ average) = \frac{112200}{Hydroxyl\ number\ (OH\#)}\ \left[\frac{g}{mol}\right]$$

Intrinsic Viscosity

The determination of the intrinsic viscosity was determined on a 0.01 g/mL polymer solution in dichloroacetic acid.

Before dissolution of solid state polymerized material, the chips were pressed in a hydraulic press (pressure: 400 kN at 115°C for about 1 minute; type: PW40® Weber, Remshalden-Grunbach, Germany). 480 to 500 mg polymer, either amorphous chips or pressed chips, were weighed on an analytical balance (Mettler AT 400®) and dichloroacetic acid is added (via Dosimat® 665 or 776 from Metrohm) in such an amount, that a final polymer concentration of 0.0100 g/mL is reached.

The polymer is dissolved under agitation (magnetic stirring bar, thermostat with set point of 65°C; Variomag Thermomodul 40ST®) at 55°C (internal temperature) for 2.0 hrs. After complete dissolution of the polymer, the solution is cooled down in an aluminum block for 10 to 15 minutes to 20°C (thermostat with set point of 15°C; Variomag Thermomodul 40ST®).

The viscosity measurement was performed with the micro Ubbelohode viscometer from Schott (type 53820/II; Ø: 0.70 mm) in the Schott AVS 500® apparatus. The bath temperature is held at 25.00 ± 0.05°C (Schott Thermostat CK 101®). First the micro Ubbelohde viscometer is purged 4 times with pure dichloroacetic acid then the pure dichloroacetic acid is equilibrated for 2 minutes. The flow time of the pure solvent is measured 3 times. The solvent is drawn off and the viscometer is purged with the polymer solution 4 times. Before measurement, the polymer solution is equilibrated for 2 minutes and then the flow time of this solution is measured 3 times.

The relative viscosity (RV) is determined by dividing the flow time of the solution by the flow time of the pure solvent. RV is converted to IV using the equation: IV (dl/g) = [(RV-1) x 0.691] + 0.063.

Thermal behavior

Melting temperature ($T_m$) was measured according to ASTM D 3418-97. A sample of about 10 mg was cut from various sections of the polymer chip and sealed in an aluminum pan. A scan rate of 10°C/min was used in a Netsch DSC204 instrument unit under a nitrogen atmosphere. The sample was heated from -30°C to 300°C, held for 5 minutes and cooled to - 30°C at a scan rate of 10°C/min prior to the second heating cycle. The melting point ($T_m$) was determined as the melting peak temperature and was measured on the 2nd heating cycle where the 2nd heating cycle is the same as the first

Haze and color

The color of the chips and preform or bottle walls was measured with a Hunter Lab ColorQuest II instrument. D65 illuminant was used with a CIE 1964 10° standard observer. The results are reported using the CIELAB color scale, L is a measure of brightness, a* is a measure of redness (+) or greenness (-) and b* is a measure of yellowness (+) or blueness (-).

The haze of the bottle walls was measured with the same instrument (Hunter Lab ColorQuest II instrument). D65 illuminant was used with a CIE 1964 10° standard observer. The haze is defined as the percent of the CIE Y diffuse transmittance to the CIE Y total transmission. Unless otherwise stated the % haze is measured on the sidewall of a stretch blow molded bottle having a thickness of about 0.25 mm.

Elemental metal content

The elemental metal content of the ground polymer samples was measured with an Atom Scan 16 ICP Emission Spectrograph from Spektro. 250 mg of the copolyester-ether was dissolved via microwave extraction by adding 2.5 mL sulfuric acid (95-97%) and 1.5 mL nitric acid (65%). The solution was cooled, then 1 mL hydrogen peroxide was added to complete the reaction and the solution was transferred into a 25 mL flask using distilled water. The supernatant liquid was analyzed. Comparison of the atomic emissions from the samples under analysis with those of solutions of known elemental ion concentrations was used to calculate the experimental values of elements retained in the polymer samples.

Oxygen ingress measurements - Non-Invasive Oxygen Determination (NIOD)

There are several methods available to determine the oxygen permeation, or transmission, into sealed packages such as bottles. In this case, non-invasive oxygen measurement systems (e.g., supplied by OxySense® and PreSens Precision Sensing) based on a fluorescence quenching method for sealed packages were employed. They consist of an optical system with an oxygen sensor spot (e.g. OxyDot©, which is a metal organic fluorescent dye immobilized in a gas permeable hydrophobic polymer) and a fiber optic reader-pen assembly which contains both a blue LED and photo-detector to measure the fluorescence lifetime characteristics of the oxygen sensor spot (e.g. OxyDot®).

The oxygen measurement technique is based upon the absorption of light in the blue region of the metal organic fluorescent dye of the oxygen sensor spot (e.g., OxyDot®), and fluorescence within the red region of the spectrum. The presence of oxygen quenches the fluorescent light from the dye as well as reducing its lifetime. These changes in the fluorescence emission intensity and lifetime are related to the oxygen partial pressure, and thus they can be calibrated to determine the corresponding oxygen concentration.

The oxygen level within a package such as a bottle can be measured by attaching an oxygen sensor spot (e.g., OxyDot®) inside the package. The oxygen sensor spot is then illuminated with a pulsed blue light from the LED of the fiber optic reader-pen assembly. The incident blue light is first absorbed by the dot and then a red fluorescence light is emitted. The red light is detected by a photo-detector and the characteristic of the fluorescence lifetime is measured. Different lifetime characteristics indicate different levels of oxygen within the package.

Experimental method with PET bottle at ambient conditions (23°C)

A PreSens non-invasive and non-destructive oxygen ingress measurement equipment (Fibox 3-trace meter, fiber optic cable and trace oxygen sensor spots) was used to determine the oxygen permeability of the bottle at room temperature (23°C). For a typical shelf-life test, the trace oxygen sensor spot was first attached onto the inner side wall of a 500 ml transparent PET bottle. The bottle was then filled with deionized and deoxygenated water containing $AgNO_3$ up to a headspace of approx. 20 ml, inside a nitrogen circulation glove box where the oxygen level of the water inside the bottle was stabilized at a level well below 50 ppb. These bottles were then stored in a conditioning cabinet (Binder 23°C, 50% relative humidity) and the oxygen ingresses were monitored as a function of time using the PreSens oxygen ingress measurement equipment.

At a given time of measurements, an average value was first obtained from about 10 readings taken on the output of the trace oxygen spot for each bottle. This was then repeated for all the 5 bottles so as to achieve an overall averaged value for the oxygen ingress through the formulated cap and the wall of the bottle.

Oxygen measurements were made on day 0, 1, 2, 3, 8, 14, 21, 28, 42 and 56, and the average oxygen ingress was determined and reported as ppb.

Preform and bottle process

Unless otherwise stated, the barrier copolyester-ether of the present invention was dried for about 24 hours at 110 - 120°C under nitrogen atmosphere, blended with the dry base resin (BP1) which contains the transition metal catalyst, melted and extruded into preforms. Each preform for a 0.5 liter soft drink bottle, for example, employed about 28 grams of the resin. The preform was then heated to about 85 - 120°C and stretch-blown into a 0.5 liter contour bottle at a planar stretch ratio of approx. 8. The stretch ratio is the stretch in the radial direction times the stretch in the length (axial) direction. Thus, if a preform is blown into a bottle, it may be stretched about two times in the axial direction and stretched up to about four times in the hoop direction giving a planar stretch ratio of up to eight (2x4). Since the bottle size is fixed, different preform sizes can be used for obtaining different stretch ratios. The sidewall thickness of the bottles was > 0.25 mm.

## Delamination test (Drop Impact Test)

Ten bottles (0.5 L) were made with from the barrier resin (copolyester-ether) and the base resin (polyester including oxidation additive) as described above. Each bottle was filled with 500 g water and capped securely.

One at a time, each bottle was first dropped in an angle of 5° through a guide plate, then straight down from approx. 150 cm onto a steel plate. The guide plate ensured that the bottle reproducibly contacted the steel plate on their sidewall. Afterwards, the bottles were inspected and visually rated for their degree of delamination. The delamination was ranked as excellent if no delamination was visually detected or barely visible; as good if only some minor delamination detected; and as poor, if large areas of delamination of up to 2.5 cm were visible.

## EXAMPLES

## Example 1- Synthesis of copolyester-ethers, batch process

Examples 1a and 1b illustrate batch processes for the preparation of copolyester-ethers. The proportions of the various components used in this example can be varied as required, as understood by the person skilled in the art.

Copolyester-ethers were prepared using following general procedures:

## E1a - Terephthalic acid (PTA)-process (Samples 1 - 6):

Terephthalic acid (PTA) and ethylene glycol (EG) in a small molar excess of glycol (PTA/EG molar ratio < 1:1.15) were charged under nitrogen into a reactor equipped with a condenser, reflux column and stirrer. The materials were then stirred continuously, heated up to a temperature of 230°C meanwhile undergo an esterification to form a low molecular weight esterification product under water release. Then, poly(tetramethylene oxide) glycol (Terathane® Polyetherglycol) of different molecular weights as indicated in the below Table 1, in an equivalent amount to 50 wt.-% of the final polymer, and Ethanox® 330 (CAS: 1709-70-2, 200 ppm based on the weight of Terathane® Polyetherglycol,) were then added together with a titanium catalyst (Sachtleben Hombifast HS06®, 20 ppm Ti based on the polymer) to the reaction mixture. The mixture was transferred to an autoclave. In a time range of 30 minutes the pressure was reduced to <0.3 mm Hg while the temperature was ramped to 250°C. The reaction mixture was held at this temperature for approx. 130 min, then the reactor was pressurized slightly with nitrogen, triethyl phosphonoacetate (13 ppm P, CAS: 867-13-0) was added to the polymer melt under stirring and the product was extruded into chilled water. After the polymer strand cooled, it was pelletized with a Scheer-bay pelletizer.

The compositions of the final copolyester-ethers as well as the thermal behavior are shown in Table 1 below.

Table 1

| Sample | 1 | 2 | 3 | 4 | 5 | 6 |
|---|---|---|---|---|---|---|
| Terathane® Polyetherglycol [g/mol] | 250 | 650 | 1000 | 1400 | 2000 | 2900 |
| $T_m$[°C] | - | 176 | 205 | 224 | 244 | 246 |

## E1b - Dimethyl terephthalate (DMT)-process (Samples 7 - 12):

Dimethyl terephthalate, a molar excess of ethylene glycol (1:2.1 mole) and zinc acetate (50 ppm Zn) as the ester interchange catalyst were charged under nitrogen into a reactor equipped with a condenser, reflux column and stirrer. The materials were stirred continuously during the transesterification and were heated to a temperature of 160-230°C under atmospheric pressure until the ester interchange reaction was complete, as evidenced by the amount of methanol removed. Triethyl phosphonoacetate (33 ppm P, CAS: 867-13-0), poly(tetramethylene oxide) glycol (Terathane® Polyetherglycol) of different molecular weights as indicated in below Table 2, in an equivalent amount to 50 weight% of the final polymer and Ethanox® 330 (CAS: 1709-70-2, 200 ppm based on the wt.% Terathane® Polyetherglycol) were then added together with tetrabutyl titanate (20 ppm Ti, Tyzor®, DuPont, USA) as a polycondensation catalyst. The mixture was transferred to an autoclave. Over a time period of 90 minutes the pressure was reduced to <0.3 mm Hg while the temperature was ramped to 250°C. The reaction mixture was held at this temperature until the required melt viscosity, as measured by the stirrer amperage, was met. The reactor was pressurized slightly with nitrogen and the product extruded into chilled water. After the polymer strand cooled, it was pelletized with a Scheer-bay pelletizer.

The compositions of the final copolyester-ethers as well as the thermal behavior are shown in Table 2 below.

Table 2

| Sample | 7 | 8 | 9 | 10 | 11 | 12 |
|---|---|---|---|---|---|---|
| Terathane® Polyetherglycol [g/mol] | 250 | 650 | 1000 | 1400 | 2000 | 2900 |
| Tm [°C] | - | 181 | 206 | 224 | 241 | 245 |

As is evident from the above Tables 1 and 2, the melting point ($T_m$) of the copolyester-ether depends in linear fashion on the molecular weight of the employed polyether.

Example 2 - Synthesis of starting materials, continuous polymerization process

Copolyester-ether was prepared using continuous polymerization process: A slurry of terephthalic acid and glycol in a small molar excess of glycol (PTA/EG molar ratio < 1:1.15) was continuously charged to the primary esterification reactor. The amount of slurry added to the primary esterification reactor was controlled by a flow measuring device. In the primary esterification reactor, terephthalic acid and glycol reacted at 250-260°C and 2-4 bar excess pressure under water elimination. The resulting low molecular weight esterification product was then transferred (via pump) to another reactor (secondary esterifier). A titanium catalyst and different amounts of poly(tetramethylene oxide) glycol (Terathane® Polyetherglycol, having a number average molecular weight of 1400 g/mole, stabilized with 200 ppm Ethanox® 330) based on the final polymer weight were then added to the reaction mixture. The amounts of Terathane® Polyetherglycol added and the type of titanium catalyst used are indicated in below Table 3. The polycondensation, the elimination of glycol under reduced pressure started at 250-260°C. The dwell time of the reaction mixture (pre-condensate) was again controlled by a flow measuring device. The pre-condensate was then discharged consecutively in two downstream reactors where the dwell time was controlled via the level of the reaction mixture in each reactor. In both reaction vessels glycol was distilled out of the reaction mixture under increased temperature and reduced pressure until the desired polymerization degree was achieved. The desired polymer melt flowed through the reactor discharge pump into a cooling bath filled with deionized water. After the polymer strand cooled, it was pelletized with a Pell-tec pelletizer.

The compositions of the final copolyester-ethers as well as the thermal behavior are shown in Table 3 below.

Table 3

| Sample | 13 | 14 | 15 | 16 | 17 | 19 | 20 | 21 | 22 | 23 | 18 |
|---|---|---|---|---|---|---|---|---|---|---|---|
| Catalyst | HS06[2] | HS06 | HS06 | HS06 | HS06 | TBT[3] | TBT | TBT | TBT | TBT | TBT |
| Catalyst [ppm Ti] | 14 | 13 | 13 | 13 | 17 | 32 | 30 | 28 | 29 | 15 | 22 |
| Terathane® Polyetherglycol / PTA-EG[1] [wt. by wt.] | 10/90 | 20/80 | 25/75 | 30/70 | 43/57 | 20/80 | 27/73 | 43/57 | 50/50 | 50/50 | 0/100 |
| $T_m$[°C] | 248 | 246 | 245 | 242 | 237 | 250 | 243 | 237 | 228 | 229 | 253 |

[1]PTA/EG ratio: < 1:1.15
[2] Sacthleben® Hombifast HS06 - Ti-based catalyst
[3]TBT - Tetrabutyltitanat Tyzor®, DuPont, USA

As is demonstrated in the above Table 3, the melting point ($T_m$) in both types of polyester-ether copolymers (Samples 13-17 and 19-22) depends on the weight ratio of the polyether segment to the polyester segment in linear fashion.

Example 3 - Preparation of preforms/bottles from barrier/base resin blend: Physical properties and delamination as well as barrier behavior

E3a - Synthesis of the base polyester (BP1)

The base resin was prepared using continuous process: A slurry of terephthalic acid, isophthalic acid (3.05 wt.-% based on the final polymer) and glycol in a small molar excess of glycol (PTA/EG molar ratio < 1:1.08) was continuously charged to the primary esterification reactor. The amount of slurry added to the primary esterification reactor was controlled by a flow measuring device. In the primary esterification reactor, terephthalic acid and glycol react at 250-260°C and 2-4 bar excess pressure under water release. The resulting low molecular weight esterification product was then transferred (via pump) to another reactor (secondary esterifier). A titanium catalyst (Sachtleben HombifastHS06, 7 ppm Ti based on the final polymer) was then added to the reaction mixture and the polycondensation, the elimination of glycol under reduced pressure started at 260-280°C. The dwell time of the reaction mixture (pre-condensate) was again controlled by a flow measuring device. The pre-condensate was then discharged consecutively in two downstream reactors whereas the dwell time was controlled via level of the reaction mixture in each reactor. In both reaction vessels further glycol was distilled out of the reaction mixture under increased temperature and reduced pressure until the desired polymerization degree is achieved. The oxidation catalyst (75 ppm cobalt as Cobalt-stearate, CAS: 1002-88-6) was added late as a melt to the reaction mixture shortly before the polymer melt flowed through the reactor discharge pump in a cooling bath with deionized water. After the polymer strand cooled, it was pelletized with a Pell-tec pelletizer.

The resulting polymer chips were crystallized for approx. 4 hours at 160°C, solid stated under vacuum at a temperature of 230°C for approx. 7 hours to the desired intrinsic viscosity value (~ IV-value: 0.860 dl/g) and then cooled to ambient temperature.

E3b - Preforms/Bottles

Barrier resins as indicated in the below Table 4 were dried and blended in varying amounts (from 2 to 10 wt.-%) with the dried base polyester resin (BP1), and injection molded into preforms. The preforms were stretch blow molded into 500 mL, 28 g bottles. The oxygen permeation, the color values as well as the haze of these bottles were measured.

The compositions of the preforms and bottles as well as physical properties are depicted in Table 4. Table 4 further shows the obtainable delamination behavior.

Table 4

| Bottle/Preform no. | | | I | II | III | IV[3] |
|---|---|---|---|---|---|---|
| Preform/Bottle composition | Barrier resin | sample | 13 | 14 | 16 | 24 |
| | | Terathane® Polyetherglycol /PTA-EG[1] [wt. by wt.] | 10/90 | 20/80 | 30/70 | 50/50 |
| | | [wt.-%] | 10 | 5 | 3.3 | 2 |
| | Base resin (BP1) | [wt.-%] | 90.0 | 95.0 | 96.7 | 98.0 |

(continued)

| Bottle/Preform no. | | | I | II | III | IV[3] |
|---|---|---|---|---|---|---|
| Bottles | Bottle properties | IV (dl/g) | 0.824 | 0.819 | 0.808 | 0.829 |
| | | L | 89 | 88.7 | 88.5 | 87.3 |
| | | a* | 0.02 | 0.04 | -0.02 | 0.19 |
| | | b* | 3.12 | 3.6 | 4.42 | 5.26 |
| | | Haze [%] | 2.4 | 2.1 | 2.1 | 3 |
| | Delamination test (bottles) | (Delamination Tendency[2]) | +++ | ++ | + | 0 |
| | Barrier performance after 56 days | [ppb] | 21 | 23 | 41 | 42 |

[1]PTA/EG ratio < 1:1.15

[2]+++: excellent, no delamination detected ++: very good, almost no delamination detected; +: good: some delamination detected in some bottles 0: poor, delamination detected in most bottles

[3] commercial resin Oxyclear® 3500 barrier resin

Those bottles falling within the scope of the present invention (bottle/preforms I, II, and III obtained from samples 13, 14 and 16) are substantially superior in their delamination behavior to comparable samples outside of the scope (sample IV obtained from sample 24). The bottles falling within the scope of the present invention have excellent barrier properties. While the invention has been described in conjunction with specific embodiments thereof, it is understood that many alternatives, modifications, and variations will be apparent to those skilled in the art in light of the foregoing description. Accordingly, it is intended to embrace all such alternatives, modifications, and variations as fall within the spirit and scope of the appended claims.

Embodiments

Although the present invention is defined in the attached claims, it should be understood that the present invention can also (alternatively) be defined in accordance with the following embodiments:

1. A composition for preparing articles, preforms or containers comprising:

a) 80-99.5 parts by weight of a base polyester;
b) 0.5-20 parts by weight of a copolyester-ether,
wherein the copolyester-ether comprises one or more polyester segments and one or more polyether segments,
wherein the one or more polyether segments are present in an amount of about 5 to about 45 wt.-% of the copolyester-ether; and
c) a transition metal-based oxidation catalyst;

wherein the melting point difference, determined according to ASTM D 3418-97, between the base polyester and the copolyester-ether is less than 15°C

2. The composition of embodiment 1, wherein the polyether segment is a linear or branched poly ($C_2$-$C_6$-alkylene glycol) segment.

3. The composition of embodiment 1 or 2, wherein the polyether segment has a number-average molecular weight from about 200 to about 5000 g/mol, preferably from about 600 to about 2500 g/mol.

4. The composition of any one of embodiments 1 to 3, wherein the polyether segments are present in the copolyester-ether in an amount of about 20 to about 35 wt.-%.

5. The composition of any one of embodiments 1 to 4, wherein the copolyester-ether comprises a polyethylene terephthalate (co)polyester segment.

6. The composition of any one of embodiments 1 to 5, wherein the base polyester is polyethylene terephthalate or a copolymer thereof and has a melting point, determined according to ASTM D 3418-97, of about 240 to about 250 °C.

7. The composition of any one of embodiments 1 to 6, wherein the melting point difference, determined according to ASTM D 3418-97, between the base polyester and the copolyester-ether is less than about 8°C.

8. The composition of any one of embodiments 1 to 7, wherein transition metal-based oxidation catalyst is a cobalt compound.

9. The composition of any one of embodiments 1 to 8, wherein the transition metal-based oxidation catalyst is present in an amount of from about 10 to about 500 ppm based on the weight of the transition metal in the total composition.

10. The composition of any one of embodiments 1 to 9, wherein the weight ratio of the one or more polyether segments to the total amount of base polyester and polyester segments in the composition is from about 0.2 to about 10 wt.%.

11. An article, preform or container comprising or prepared from a composition according to any one of embodiments 1 to 10.

12. A masterbatch for use in preparing articles, preforms or containers comprising:

a) a copolyester-ether,

a1) wherein the copolyester-ether comprises one or more polyethylene terephthalate (co)polyester segments and one or more linear or branched poly ($C_2$-$C_6$-alkylene glycol) segments, and
a2) wherein the one or more polyether segments are present in an amount of about 5 to about 45 wt.-% in the copolyester-ether, and
a3) wherein the melting point, determined according to ASTM D 3418-97, of the copolyester-ether is from about 225°C to about 250°C; and

b) 20-5000 ppm, on basis of the weight of the one or more linear or branched poly ($C_2$-$C_6$-alkylene glycol) segments, of one or more antioxidants selected from group consisting of hindered phenols, benzophenones, sulfur-based antioxidants, phosphites and hindered amine light stabilizers.

13. The masterbatch of embodiment 12, wherein the copolyester-ether comprises one or more poly (butylene glycol) or poly (propylene glycol) segments, wherein the one or more poly (butylene glycol) or poly (propylene glycol) segments are present in an amount of about 20 to 35 wt.-% in the copolyester-ether, and wherein the melting point, determined according to ASTM D 3418-97, of the copolyester-ether is from about 225°C to about 250°C.

14. The masterbatch of embodiments 12 or 13, wherein the poly ($C_2$-$C_6$-alkylene glycol) segments have a number-average molecular weight from about 600 to about 2500 g/mol, preferably from about 600 to about 1800 g/mol.

15. A copolyester-ether comprising one or more polyethylene terephthalate (co)polymer segments and one or poly(butylene glycol) or poly(propylene glycol) segments, wherein the one or more poly(butylene glycol) or poly(propylene glycol) segments are present in an amount of about 20 to about 35 wt.-% in the copolyester-ether, and having a melting point, determined according to ASTM D 3418-97, of from about 225°C to about 250°C.

16. The copolyester-ether of embodiment 15, wherein the poly (butylene glycol) or poly (propylene glycol) segments have a number average molecular weight of about 600 to about 1800 g/mol.

17. A method of preparing an article, preform or container, wherein 80-99.5 parts by weight of a base polyester are blended with:

a) 0.5-20 parts by weight of a copolyester-ether,
wherein the copolyester-ether comprises one or more polyester segments and one or more polyether segments, wherein the one or more polyether segments are present in an amount of about 5 to about 45 wt.-% of the copolyester-ether, and
b) a transition metal-based oxidation catalyst;

wherein the melting point difference, determined according to ASTM D 3418-97, between the base polyester and the copolyester-ether is less than 15°C.

18. Use of a copolyester-ether for preparing an article, preform or container, wherein the copolyester-ether comprises one or more polyester segments and one or more polyether segments, wherein the one or more polyether segments are present in the copolyester-ether in an amount from about 5 to about 45 wt.-%, and wherein the melting point of the copolyester-ether, determined according to ASTM D 3418-97, is from about 225°C to about 250°C; for preparing an article, preform or container.

19. Use of a copolyester-ether, wherein the copolyester-ether comprises one or more polyester segments and one or more polyether segments, wherein the one or more polyether segments are present in the copolyester-ether in an amount from about 5 to about 45 wt.-%, and wherein the melting point of the copolyester-ether, determined according to ASTM D 3418-97, is from about 225°C to about 250°C; for preparing a kit-of-parts comprising said copolyester-ether and physical or electronic instructions or advise to use said copolyester-ether for preparing an article, preform or container.


**Claims**

1. A composition for preparing articles, preforms or containers comprising:

   a) 80-99.5 parts by weight of a base polyester;
   b) 0.5-20 parts by weight of a copolyester-ether,
   wherein the copolyester-ether comprises one or more polyester segments and one or more polyether segments, wherein the one or more polyether segments are present in an amount of about 5 to about 45 wt.-% of the copolyester-ether; and
   c) a transition metal-based oxidation catalyst;

   wherein the melting point difference, determined according to ASTM D 3418-97, between the base polyester and the copolyester-ether is less than 15°C

2. The composition of claim 1, wherein the polyether segment is a linear or branched poly ($C_2$-$C_6$-alkylene glycol) segment.

3. The composition of claim 1 or 2, wherein the polyether segment has a number-average molecular weight from about 200 to about 5000 g/mol, preferably from about 600 to about 2500 g/mol.

4. The composition of any one of claims 1 to 3, wherein the polyether segments are present in the copolyester-ether in an amount of about 20 to about 35 wt.-%.

5. The composition of any one of claims 1 to 4, wherein the copolyester-ether comprises a polyethylene terephthalate (co)polyester segment.

6. The composition of any one of claims 1 to 5, wherein the base polyester is polyethylene terephthalate or a copolymer thereof and has a melting point, determined according to ASTM D 3418-97, of about 240 to about 250 °C.

7. The composition of any one of claims 1 to 6, wherein the melting point difference, determined according to ASTM D 3418-97, between the base polyester and the copolyester-ether is less than about 8°C.

8. The composition of any one of claims 1 to 7, wherein transition metal-based oxidation catalyst is a cobalt compound.

9. The composition of any one of claims 1 to 8, wherein the transition metal-based oxidation catalyst is present in an amount of from about 10 to about 500 ppm based on the weight of the transition metal in the total composition.

10. The composition of any one of claims 1 to 9, wherein the weight ratio of the one or more polyether segments to the total amount of base polyester and polyester segments in the composition is from about 0.2 to about 10 wt.%.

11. A masterbatch for use in preparing articles, preforms or containers comprising:

a) a copolyester-ether,

a1) wherein the copolyester-ether comprises one or more polyethylene terephthalate (co)polyester segments and one or more linear or branched poly ($C_2$-$C_6$-alkylene glycol) segments, and
a2) wherein the one or more polyether segments are present in an amount of about 5 to about 45 wt.-% in the copolyester-ether, and
a3) wherein the melting point, determined according to ASTM D 3418-97, of the copolyester-ether is from about 225°C to about 250°C; and

b) 20-5000 ppm, on basis of the weight of the one or more linear or branched poly ($C_2$-$C_6$-alkylene glycol) segments, of one or more antioxidants selected from group consisting of hindered phenols, benzophenones, sulfur-based antioxidants, phosphites and hindered amine light stabilizers.

12. The masterbatch of claim 11, wherein the copolyester-ether comprises one or more poly (butylene glycol) or poly (propylene glycol) segments, wherein the one or more poly (butylene glycol) or poly (propylene glycol) segments are present in an amount of about 20 to 35 wt.-% in the copolyester-ether, and wherein the melting point, determined according to ASTM D 3418-97, of the copolyester-ether is from about 225°C to about 250°C.

13. The masterbatch of claims 11 or 12, wherein the poly ($C_2$-$C_6$-alkylene glycol) segments have a number-average molecular weight from about 600 to about 2500 g/mol, preferably from about 600 to about 1800 g/mol.

14. A copolyester-ether comprising one or more polyethylene terephthalate (co)polymer segments and one or poly(butylene glycol) or poly(propylene glycol) segments, wherein the one or more poly(butylene glycol) or poly(propylene glycol) segments are present in an amount of about 20 to about 35 wt.-% in the copolyester-ether, and having a melting point, determined according to ASTM D 3418-97, of from about 225°C to about 250°C.

15. The copolyester-ether of claim 14, wherein the poly (butylene glycol) or poly (propylene glycol) segments have a number average molecular weight of about 600 to about 1800 g/mol.

Europäisches
Patentamt

European
Patent Office

Office européen
des brevets

# EUROPEAN SEARCH REPORT

Application Number

EP 13 19 9102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/103217 A1 (SUNKARA HARI BABU [US]) 1 May 2008 (2008-05-01) * examples C2, 2, 3; table 1 * | 1-15 | INV. C08K3/30 C08K3/32 C08G63/672 C08K5/13 C08K5/132 C08K5/17 C08L67/02 ADD. C08K3/24 |
| A | WO 2009/032560 A1 (INVISTA TECHNOLOGIES S AR L [CH]; CHEN YAN [US]; SUN QUN [US]; DRBOHLA) 12 March 2009 (2009-03-12) * claims 1-3, 5, 6, 10, 13, 18, 19; examples 5, D, 6; table 2 * | 1-15 | |
| X | WO 2012/126951 A1 (PLASTIC RELIFE SRL [IT]; SEVERINI TONINO [IT]) 27 September 2012 (2012-09-27) | 1-10 | |
| A | * page 8, line 3 - page 9, line 5; examples 10-15; table 4 * | 11-15 | |
| X | WO 01/10947 A1 (EASTMAN CHEM CO [US]) 15 February 2001 (2001-02-15) * claims 20-23, 36-44; examples 20, 25, 26, 31, 32; tables 10, 11 * | 1-15 | |
| A | US 2001/047063 A1 (HOMMA KEN [JP] ET AL) 29 November 2001 (2001-11-29) * paragraph [0055] - paragraph [0066]; example 1; table 1 * | 1-15 | TECHNICAL FIELDS SEARCHED (IPC) C08L C08G C08K B32B |
| A | US 2006/058435 A1 (SZEKELY PETER L [FR]) 16 March 2006 (2006-03-16) * paragraph [0070] - paragraph [0095]; examples Copolyester C, A-C * | 11-15 | |
| A | US 3 023 192 A (SHIVERS JR JOSEPH CLOIS) 27 February 1962 (1962-02-27) * examples III, XIV, XVI * | 11-15 | |
| A | EP 0 315 325 A2 (ICI PLC [GB]) 10 May 1989 (1989-05-10) * claim 1; example 1; tables 1, 2 * | 11-15 | |

The present search report has been drawn up for all claims

| Place of search | Date of completion of the search | Examiner |
|---|---|---|
| The Hague | 1 August 2014 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 13 19 9102

The Search Division considers that the present European patent application does not comply with the requirements of unity of invention and relates to several inventions or groups of inventions, namely:

1. claims: 1-10

    A composition for preparing articles, preforms or containers comprising: a) 80-99.5 parts by weight of a base polyester; b) 0.5-20 parts by weight of a copolyester-ether, wherein the copolyester-ether comprises one or more polyester segments and one or more polyether segments, wherein the one or more polyether segments are present in an amount of about 5 to about 45 wt.-% of the copolyester-ether; and c) a transition metal-based oxidation catalyst; wherein the melting point difference, determined according to ASTM D 3418-97, between the base polyester and the copolyester-ether is less than 15 degrees C.

    ---

2. claims: 11-15

    A masterbatch for use in preparing articles, preforms or containers comprising: a) a copolyester-ether, a1) wherein the copolyester-ether comprises one or more polyethylene terephthalate (co)polyester segments and one or more linear or branched poly (C2-C6-alkylene glycol) segments, and a2) wherein the one or more polyether segments are present in an amount of about 5 to about 45 wt.-% in the copolyester-ether, and a3) wherein the melting point, determined according to ASTM D 3418-97, of the copolyester-ether is from about 225 degrees C to about 250 degrees C; and b) 20-5000 ppm, on basis of the weight of the one or more linear or branched poly (C2-C6-alkylene glycol) segments, of one or more antioxidants selected from group consisting of hindered phenols, benzophenones, sulfur-based antioxidants, phosphites and hindered amine light stabilizers.

    ---

## ANNEX TO THE EUROPEAN SEARCH REPORT
## ON EUROPEAN PATENT APPLICATION NO.

EP 13 19 9102

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2014

| Patent document cited in search report | | | Publication date | Patent family member(s) | | | Publication date |
|---|---|---|---|---|---|---|---|
| US | 2008103217 | A1 | 01-05-2008 | BR | PI0716362 | A2 | 17-09-2013 |
| | | | | CA | 2662834 | A1 | 08-05-2008 |
| | | | | CN | 101535371 | A | 16-09-2009 |
| | | | | DE | 112007002474 | T5 | 17-09-2009 |
| | | | | JP | 2010508394 | A | 18-03-2010 |
| | | | | KR | 20090082362 | A | 30-07-2009 |
| | | | | US | 2008103217 | A1 | 01-05-2008 |
| | | | | US | 2011021697 | A1 | 27-01-2011 |
| | | | | WO | 2008054777 | A2 | 08-05-2008 |
| WO | 2009032560 | A1 | 12-03-2009 | AR | 068139 | A1 | 04-11-2009 |
| | | | | AT | 548423 | T | 15-03-2012 |
| | | | | EP | 2183318 | A1 | 12-05-2010 |
| | | | | US | 2011008554 | A1 | 13-01-2011 |
| | | | | WO | 2009032560 | A1 | 12-03-2009 |
| WO | 2012126951 | A1 | 27-09-2012 | EP | 2688745 | A1 | 29-01-2014 |
| | | | | US | 2014008368 | A1 | 09-01-2014 |
| | | | | WO | 2012126951 | A1 | 27-09-2012 |
| WO | 0110947 | A1 | 15-02-2001 | AU | 776210 | B2 | 02-09-2004 |
| | | | | AU | 6530400 | A | 05-03-2001 |
| | | | | BR | 0013129 | A | 23-04-2002 |
| | | | | EP | 1212372 | A1 | 12-06-2002 |
| | | | | MX | PA02001408 | A | 30-07-2002 |
| | | | | US | 6455620 | B1 | 24-09-2002 |
| | | | | WO | 0110947 | A1 | 15-02-2001 |
| US | 2001047063 | A1 | 29-11-2001 | NONE | | | |
| US | 2006058435 | A1 | 16-03-2006 | US | 2006058435 | A1 | 16-03-2006 |
| | | | | WO | 2006034168 | A1 | 30-03-2006 |
| US | 3023192 | A | 27-02-1962 | NONE | | | |
| EP | 0315325 | A2 | 10-05-1989 | AU | 610306 | B2 | 16-05-1991 |
| | | | | AU | 2666288 | A | 19-07-1990 |
| | | | | CA | 1316618 | C | 20-04-1993 |
| | | | | EP | 0315325 | A2 | 10-05-1989 |
| | | | | JP | H01161016 | A | 23-06-1989 |
| | | | | US | 4968778 | A | 06-11-1990 |
| | | | | US | 4970275 | A | 13-11-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010096459 A2
- WO 2011031929 A2